# EUROPEAN PATENT SPECIFICATION

(11) **EP 4 361 816 B1**
(45) Date of publication and mention of the grant of the patent: **25.02.2026**
(21) Application number: 23200415.0
(22) Date of filing: 28.09.2023
(51) Int. Cl.: G06F 11/14, G06F 11/30, G06F 11/34, G06F 11/20

(54) **DISTRIBUTED JOURNAL FOR HIGH PERFORMANCE CONTINUOUS DATA PROTECTION**
VERTEILTES JOURNAL FÜR HOCHLEISTUNGSFÄHIGEN KONTINUIERLICHEN DATENSCHUTZ
JOURNAL DISTRIBUÉ POUR PROTECTION DE DONNÉES CONTINUE HAUTE PERFORMANCE

(30) Priority: 30.09.2022 US 202217957303
(43) Date of publication of application: 01.05.2024
(73) Proprietor: Cohesity, Inc., Santa Clara, California 95054 (US)
(72) Inventor: AGARWAL, Shobhit, San Jose, CA 95110 (US); NERELLA, Kishan Venkata Sravan, San Jose, CA 95110 (US)
(74) Representative: EIP

(56) References cited:
- US-A1- 2017 102 998
- US-A1- 2022 179 748
- US-B1- 8 849 764

## Description

### BACKGROUND OF THE INVENTION

A source system, which may be referred to as a primary system, may backup one or more objects to a storage system, which may be referred to as a secondary storage system. A user associated with the source system may specify a recovery point objective (RPO) and a recovery time objective (RTO). RPO is a measure of the acceptable amount of data loss for the one or more objects after a disruption of the source system. RTO is a measure of how fast the one or more objects need to be back online after the disruption. A value for an RPO or for an RTO may be specified as an amount of time. For example, an RPO of one second may indicate that a loss of data from one second prior to a disruption is acceptable.

The user associated with the source system may specify a near-zero RPO. For low change rate objects (e.g., objects having a change rate below a threshold change rate), the storage system can provide continuous data protection (CDP) to satisfy the specified RPO. The storage system may log the changes associated with the workload in a data log. However, for high change rate objects, the data change rate may exceed the rate at which the storage system is capable of writing data to the data log. As a result, the storage system becomes a bottleneck and may be unable to provide CDP that satisfies the specified RPO.

US 8 849 764 B1 describes that as data is written to primary storage, it is automatically mirrored for data protection as part of a High Availability (HA) process. Real-time analysis is done in-line with the HA processing, enabling data analytic procedures.

US 2017/102998 A1 describes determining an amount of time to transfer a first file on a first device to a second device. Historical operational information associated with the first and second devices is received and a transfer model is created correlating the amount of time to transfer the first file with the historical operational information associated with each device.

US 2022/179748 A1 describes receiving content of an object of a source system for backup at a backup system. A standby version of the object of the source system is maintained at a recovery system. A backup of the received content is performed using the backup system. In response to a request to place the standby version at a specified recovery time point, backup data utilized in updating the standby version to the specified recovery time point is provided to the recovery system via the backup system.

### SUMMARY

Aspects of the invention are defined by the appended independent claims.

### BRIEF DESCRIPTION OF THE DRAWINGS

Various embodiments of the invention are disclosed in the following detailed description and the accompanying drawings.
FIG. 1 is a block diagram illustrating a system for providing continuous data protection in accordance with some embodiments.
FIG. 2 is a flow diagram illustrating a process for providing continuous data protection in accordance with some embodiments.
FIG. 3 is a flow diagram illustrating a process for dynamically selecting one or more data logs in accordance with some embodiments.
FIG. 4 is a flow diagram illustrating a process for updating a locator register log in accordance with some embodiments.
FIG. 5A is a flow diagram illustrating a process for providing continuous data protection in accordance with some embodiments.
FIG. 5B is a flow diagram illustrating a process for providing continuous data protection in accordance with some embodiments.

### DETAILED DESCRIPTION

A source system may host one or more objects (e.g., virtual machine (VM), database, applications, etc.). A storage system may be configured to provide continuous data protection (CDP) for the source system. CDP may be provided by providing a write filter for each of the one or more objects. A write filter may be configured to intercept all input/outputs (IOs) of an associated object, filter out the read IOs, and attach a sequence number to each intercepted write IO (referred to as a "data change" herein).

The sequence number may include an incarnation ID, which may be referred to as an incarnation identifier. The sequence number may include a change ID, which may be referred to as a change identifier. The incarnation ID may indicate an incarnation of the write filter and may be incremented each time the write filter is restarted after a crash (e.g., object crash, filter crash). The change ID may be incremented for each data change. The change ID may therefore be specific to each data change.

A write filter may be configured to provide a stream of data changes (e.g., changes to metadata or data content) to a controller VM associated with, e.g., stored at or accessible to, the source system. Each data change included in the stream of data changes may be sequential, that is, a data change included may have a sequence number that is greater than the sequence number associated with a previous data change included in the set. The controller VM may be configured to provide the data changes to a continuous data protection service ("CDP service") running on a first node of a plurality of nodes associated with the storage system. In some embodiments, the first node may be capable of ingesting the set of data changes at a particular rate and logging the set of data changes in its data log in a manner that enables a specified RPO and/or RTO to be satisfied. For example, a specified RPO may be 1 second. A size of the set of data changes may be 100 MB, and the first node may be capable of logging the data changes at a rate of 100 MB/s based on current metrics of the first node (e.g., ingest queue length, CPU utilization), meaning that the 100 MB set may be logged by the first node in 1 second, so the RPO may be satisfied. In some embodiments, the first node may not be capable of ingesting the set of data changes at a particular rate and/or logging the set of data changes in its data log in a manner that enables the specified RPO and/or RTO to be satisfied. For example, a specified RPO may be 1 second. A size of the set of data changes may be 1 GB, and the first node may be capable of logging the data changes at a rate of 100 MB/s based on the current metrics of the first node. In this example, at least 10 seconds may be needed to log the data changes to the selected data log, meaning that the RPO may not be satisfied by the first node. For a high change rate object where the first node may continue to receive one or more additional sets of data changes, the first node may store the one or more additional sets of data changes in a buffer of the first node. However, the first node may become a bottleneck as one or more sets of data changes accumulate and prevent the specified RPO and/or RTO from being satisfied.

Techniques to prevent a node of the storage system from becoming a bottleneck when providing CDP for a high change rate object associated with a source system are disclosed. Although the techniques are described with respect to CDP, the techniques disclosed herein may be applicable whenever a data management operation (e.g., backup, migration, replication, archive, etc.) is performed for a cohort of data that is provided from a first system to a second system.

According to a first aspect of the invention, there is provided a method for recording data changes to an object stored at a source system. The method comprises receiving a set of data changes made to the object stored at the source system. The method comprises selecting one or more data logs for recording the set of data changes. The one or more data logs are selected from among a plurality of data logs stored in a corresponding plurality of nodes of a storage system. The selecting is based at least in part on the received set of data changes and a value of a metric determined for one or more of the nodes of the storage system. The method comprises recording each of at least some of the data changes in the set of data changes in a data log of the one or more selected data logs. The method comprises storing at least one reference that maps each data change to the data log in which the data change is recorded. In a second aspect, there is provided a computer program product embodied in a non-transitory computer readable medium and comprising computer instructions for performing the method, and in a third aspect, there is provided a system comprising one or more processors and memory storing instructions, that when implemented by the one or more processors, cause the system to perform the method.

By selecting data logs dynamically as in the above method, greater efficiency may be achieved in ingesting and/or storing those changes. In particular, the changes may be adaptively stored so that the process of ingesting and/or storing those changes is faster. The techniques described herein may also make better use of available computational resources, avoiding overloading or over-utilization. Storing changes more quickly at a storage system may result in reduced data loss in the event of a disruption. Reducing data loss may allow for improved CDP. Reducing data loss allows for an RPO to be satisfied. By allowing improved CDP, a source system may be restored to a more recent state. In some examples, ingesting and storing the data more quickly may lead to reductions in the amount of time taken to restore a system, because latency between receiving and storing the data may be reduced. By reducing latency, the amount of data to be ordered and stored before being provided for restore is reduced, and as a result, the data can be provided more quickly for the restoration. Accordingly, an RTO may be satisfied.

Selecting the one or more data logs may be referred to as dynamically selecting. The selection is based at least on a dynamic analysis of the metric or of metrics of different nodes of the storage system. A dynamic selection or analysis is achieved by performing the step in response to receiving the one or more changes. In other words, the selection and/or the analysis may be reperformed each time a set of data changes is received. Accordingly, the step of selecting the one or more data logs may include the analysis of the metric and/or determining the value of the metric. This may enable dynamic selection of the one or more data logs responsive to the set of data changes. Analyzing includes determining a value of the one or more metrics. The analysis may be performed as part of the step of selecting the one or more data logs. Each data log may comprise one or more log files. The data logs may be stored at the storage system prior to performing the method and may include previous data changes made to the object or to a plurality of objects.

At least some of the data changes are recorded and a reference is stored for those recorded data changes. At least some of the data changes are recorded in a data log of the one or more selected data logs and one or more references are stored for the data changes in the set.

The metric(s) comprise an ingest queue length, and/or a CPU utilization. The metrics associated with a node may influence a rate at which the node is capable of recording a set of data changes. Ingest queue length and CPU utilization may enable determination of how quickly the set of data changes can be recorded at that node.

The value of the metric may be determined for a first node of the plurality of nodes. The first node may comprise a first data log. The method may comprise determining whether the first node is capable of recording the set of data changes within the predetermined amount of time, based on the value of the metric and a predetermined amount of time. For example, an amount of time to record the set of data changes may be determined based on the value of the metric and compared with the predetermined amount of time to perform said determination, or a rate corresponding to the predetermined amount of time may be determined and compared to a rate determined based on the value of the metric to perform said determination. The predetermined amount of time is specified by a recovery point objective, RPO. Determining whether the first node is capable of recording the set of data changes within the predetermined amount of time may be referred to as determining that the first node is capable of recording the data changes in a manner that satisfies the RPO. The method may comprise selecting the one or more data logs, based on determining whether the first node is capable of recording the set of data changes within the predetermined amount of time. This may enable greater flexibility in the use of different nodes and their computational resources to efficiently and effectively record the data changes.

In response to determining that the first node is capable of recording the set of data changes within the predetermined amount of time, the first data log may be selected as the one or more data logs and the data changes may be recorded in the first data log. The first node may be capable of satisfying the RPO if the metric indicates that it is able to ingest data changes at a particular rate or within a particular time. Ingesting data changes to the first log may result in the data changes being stored together whilst still satisfying the RPO.

In response to determining that the first node is not capable of recording, or otherwise unable to record the set of data changes within the predetermined amount of time, two or more data logs of the plurality of data logs may be selected as the one or more data logs and the data changes may be recorded in parallel across the two or more data logs. The two or more data logs may include the first data log or may be different to the first data log. The two or more data logs may comprise the plurality of data logs. Selecting two or more logs makes use of the available computational resources to share the task of recording the data changes, so that the amount of time in which the data changes can be recorded may be reduced. Storing the data changes in parallel across the two or more logs may reduce an amount of time required to record the changes, thereby ensuring that the changes are recorded more quickly and, as such, less data is lost in the event of a disruption.

In response to determining that the first node is not capable of recording, or otherwise unable to record the set of data changes within the predetermined amount of time, the method may further include dividing the set of data changes into a plurality of subsets, wherein the number of subsets corresponds to the number of selected data logs. Each subset may be stored at a respective data log of the two or more data logs.

If the set of data changes are stored at a single log, a single reference may be stored that maps the set of data changes to the single log. If the data changes are stored across a plurality of logs, a plurality of references may be stored. Each reference may map a subset of data changes to the data log in which it is stored. For example, two or more data logs may be selected that include a first data log of a first node and a second data log of a second node. The data changes may be stored in at least the first data log and the second data log. A first subset of the set of data changes may be stored in the first data log, and a second subset of the set of data changes and that includes different data changes to the first subset may be stored in the second data log. A first reference may be stored that maps the first subset of data changes to the first data log. A second reference may be stored that maps the second subset of data changes to the second data log.

A value for the metric may be determined for each of the plurality of nodes. The two or more data logs may be selected based on the values of the metric for the plurality of nodes and the predetermined amount of time. Determining the nodes based on metrics for each node may enable the fewest number of nodes to be selected across which the set of data changes can be stored.

The at least one reference may be stored in a locator log, which may be referred to as a locator register log, a locator log file, or a register. References to previous sets of data changes may already be stored in the locator log. Updates to the locator log may be made if they are consistent with existing entries or updates. This ensures that data is stored in order or in-sequence so that it can be quickly provided to a source system when restoring data. Storing the at least one reference may include determining the at least one reference based on the set of data changes and the one or more selected data logs, determining that the at least one reference is in-sequence with a most recent reference stored in the locator log, and storing the at least one reference in the locator log in response to determining that the at least one reference is in-sequence with the most recent reference stored in the locator log.

Upon attempting to update the locator log, an update or reference may be considered to be inconsistent or out-of-sequence. Accordingly, storing, in the locator log, the at least one reference may further comprise, prior to determining that the at least one reference is in-sequence with the most recent reference stored in the locator log: determining that the at least one reference is out-of-sequence with the most-recent reference stored in the locator log; storing the at least one reference in a buffer; and storing, as the most recent reference a further reference in the locator log, wherein the at least one reference is in-sequence with the further reference. Each data change may have a corresponding sequence number. Determining that the at least one reference is in-sequence with a most recent reference stored in the locator log may include determining that a first sequence number in a set of sequence numbers associated with the at least one reference is the next sequential number after the sequence number associated with the most recent reference. Using a buffer or other temporary storage location until the reference is in-sequence may allow the data to be retained before being stored in the locator log.

The method may be repeated for a further set of data changes made to the object at the source system that is different from the set of data changes. The method may comprise receiving the further set of data changes. The method may comprise selecting one or more further data logs for recording the further set of data changes. The one or more further data logs may be selected from among the plurality of data logs stored in the corresponding plurality of nodes of the storage system. The selecting may be based at least in part on a further value of the metric determined for one or more of the nodes of the storage system and the received further set of data changes. The one or more further data logs may be the same one or more data logs as selected for the set of data changes or may be a different set of data logs. The method may comprise recording each of at least some of the data changes in the further set of data changes in a data log of the one or more selected further data logs. The method may comprise storing at least one further reference that maps each data change to the data log in which the data change is recorded. The further reference may be stored in the same locator log as the previous reference.

The method may comprise using the reference as part of a restore operation. The method may comprise receiving a request to restore data to the source system, the data including at least a portion of the set of data changes. The at least one reference may be used to locate, in the selected data logs, the at least a portion of the set of data changes. The data including the at least the portion of the set of data changes may be provided to the source system.

In a first technique according to the above aspects, the steps of the above method may be performed at the storage system, such as at a CDP service at a node of the storage system. Performing the method at the storage system reduces computational resource use at the source system. In the first technique, a controller VM associated with a source system may accumulate a stream of data changes of an object associated with the source system and may provide one or more sets of data changes (e.g., batches) to a CDP service running on a first node of a plurality of nodes associated with the storage system. Each of the plurality of nodes may be running a corresponding CDP service. The controller VM may be configured to provide the data changes to any of the nodes associated with the storage system. The first node may be coupled to the other node(s) associated with the storage system. The first node and each of the other node(s) include a corresponding data log (e.g., a journal). Each data log may be capable of storing data changes. The process described below may be repeated each time the CDP service associated with the first node receives a set of data changes from the controller VM. By repeating the process for each received set of data changes, the process or steps thereof may be described as 'dynamic' or as being 'dynamically' performed. A first set of data changes may correspond to a first epoch, a second set of data changes may correspond to a second epoch, ..., and an nth set of data changes may correspond to an nth epoch.

In the first technique, each time the CDP service associated with the first node receives a set of data changes, the CDP service associated with the first node may analyze one or more metrics of at least one of the plurality of nodes associated with the storage system. As indicated by the above method, the CDP service selects one or more data logs for recording the data changes, from among the plurality of data logs stored in the corresponding plurality of nodes the storage system. This may be described as the CDP service dynamically selecting for recording the received set of data changes on one or more data logs among a plurality of data logs stored in the plurality of nodes associated with the storage system based at least in part on a dynamic analysis of metrics of the plurality of nodes associated with the storage system. In other words, the CDP service may dynamically select one or more data logs from among the plurality of data logs. The selection may be based at least in part on the value or analysis of the one or more metrics performed by the CDP service. The selection may be based at least in part on the received set of data changes.

The CDP service records or logs at least some of the set of data changes in the selected one or more data logs. Each data change may be recorded in a data log of the one or more selected data logs. The CDP service stores at least one reference to the data changes and the data logs. The reference maps each data change to the data log in which that data change is recorded.

In some embodiments, the CDP service associated with the first node may dynamically select a single data log (e.g., the data log associated with the first node) based at least in part on a dynamic analysis of metrics of the plurality of nodes.

The analysis of the metric may indicate that the first node is individually capable of ingesting the set of data changes at the particular rate and/or logging the data changes included in the set in a manner that meets the specified RPO and/or RTO. The metrics of the different nodes associated with the storage system may include ingest queue length, CPU utilization, etc. The metrics associated with a node may influence a rate at which the node is capable of logging a set of data changes. In response to determining whether the first node is capable of recording the set of data changes within the predetermined time, the CDP service associated with the first node may log the set of data changes in the data log associated with the first node. Subsequently, the CDP service associated with the first node may record in a locator register log, which may be referred to as a locator log, a reference to a portion of the data log, such as an offset or location within the data log, associated with the first node storing the received set of data changes. In other words, in response to determining that the first node is capable of recording the set of data changes within the predetermined amount of time, the first data log may be selected as the one or more data logs. The data changes may be recorded in the first data log.

In some embodiments, the locator register log may be located at a single node of the storage system. In some embodiments, the locator register log may be a distributed log shared between the nodes of the storage system.

In some embodiments, the CDP service associated with the first node may determine that the first node is not individually capable of ingesting the set of data changes at a particular rate and/or logging the data changes included in the set in a manner that meets the specified RPO and/or RTO. In response to such a determination, the CDP service associated with the first node may select a plurality of data logs associated with a plurality of nodes based at least in part on an analysis of metrics of the plurality of nodes associated with the storage system. The set of changes may be divided into a plurality of subsets. The subsets may be recorded, in parallel, at a corresponding a corresponding selected data log associated with the plurality of nodes. After logging a corresponding subset of data changes in a selected data log, the CDP service associated with the first node may record in a locator register log a reference to a portion of the selected data log associated with the node storing the corresponding subset of data changes. The parallel ingestion of data changes may prevent a single node from becoming overloaded with logging data changes and becoming a bottleneck.

Each data change included in a set or subset of data changes may be associated with a corresponding sequence number. In some embodiments, a second node may finish logging a second set or subset of data changes (e.g., data changes 51-100) before a first node finishes logging a first set or subset of data changes (e.g., data changes 1-50). The CDP service associated with the second node may provide the CDP service associated with the first node an indication to update the locator register log because the second node has finished logging the second set or subset of data changes. In response to receiving the indication, the first node may perform a check before updating the locator register log and prevent the locator register log from being updated with data changes that are out-of-sequence (e.g., logging data changes 51-100 before logging data changes 1-50). A data change may be consistent or in-sequence if a sequence number associated with the data change is in-sequence with respect to a previous data change. A data change may be inconsistent or out-of-sequence if the sequence number associated with the data change is out-of-sequence with respect to a previous data change. The first node may determine whether the update associated with the second node is a consistent update. In response to a determination that the update is a consistent update, the CDP service associated with the first node may update the locator register log. In response to a determination that the update is an inconsistent update, the CDP service associated with the first node may store the update in a buffer associated with the first node. This may ensure that the locator register log is consistent in the event any of the nodes go offline before the locator register log is updated. For example, the locator register log may be considered to be consistent if data changes 1-50 are logged, data changes 51-68 are logged, and then the first node goes offline. However, the locator register log may be considered to be inconsistent if data changes 51-100 are logged and then the second node goes offline. In this example, locator register log would be missing entries for data changes 0-50. A consistent locator register log may be needed to restore the object to any point in time for which there is an associated data change. The CDP service associated with the first node may update the locator register log at a later point in time at which the locator register log update associated with the second node becomes a consistent update.

In a second technique, the method may be partially performed at the source system and partially performed at the storage system. The data logs may be selected by a controller VM at the source system rather than being selected by a CDP service associated with a node of the storage system. The controller VM may then distribute the set of data changes to the nodes associated with the selected data logs for storage. The second technique may allow more dynamic selection of data logs because the controller VM may determine values for metrics or analyze the metrics across the plurality of nodes. According to the second technique, the controller VM associated with the source system may accumulate the stream of data changes associated with an object into a set of data changes, may analyze one or more metrics of a plurality of nodes associated with the storage system, and may determine whether any of the nodes associated with the storage system is individually capable of ingesting the set of data changes at a particular rate and logging the data changes included in the set in a manner that meets the specified RPO and/or RTO. The process described below may be repeated each time the controller VM accumulates a set of data changes. A first set of data changes may correspond to a first epoch, a second set of data changes may correspond to a second epoch, ..., and an nth set of data changes may correspond to an nth epoch.

The controller VM associated with the source system dynamically selects for recording the received set of data changes on one or more data logs among a plurality of data logs stored in the plurality of nodes associated with the storage system based at least in part on a dynamic analysis of metrics of the plurality of nodes associated with the storage system. In some embodiments, the controller VM associated with the source system may select the data log associated with a single node because the single node is capable of ingesting the set of data changes at a particular rate and logging the data changes in a manner that enables the specified RPO and/or RTO to be satisfied. The controller VM may provide the received set of data changes to the single node associated with the selected data log. In response, the CDP service associated with the single node may ingest the set of data changes and log in the selected data log associated with the single node the set of data changes. After logging the received set of data changes in the selected data log, the CDP service associated with the single node may record in a locator register log a reference to a portion of the selected data log associated with the single node storing the received set of data changes.

In some embodiments, the controller VM associated with the source system may select a plurality of data logs associated with a plurality of nodes based at least in part on a dynamic analysis of metrics of the plurality of nodes associated with the storage system, may divide the set of changes into a plurality of subsets because a single node is not capable of ingesting the set of data changes at a particular rate and/or logging the data changes in a manner that enables the specified RPO and/or RTO to be satisfied, and may provide a corresponding subset to each of the nodes associated with the selected data logs. The plurality of subsets may be associated with the same epoch. In response, a CDP service of a node associated with a selected data log, in parallel with the other CDP services of the other nodes, may ingest the corresponding subset of data changes and may log in the selected data log the corresponding subset of data changes. After logging the corresponding subset of data changes in the selected data log, the CDP service of a node associated with the selected data log records in a locator register log a reference to a portion of the selected data log associated with the node storing the subset of data changes. The parallel ingestion of data changes may prevent a single node from becoming overloaded with logging data changes and becoming a bottleneck.

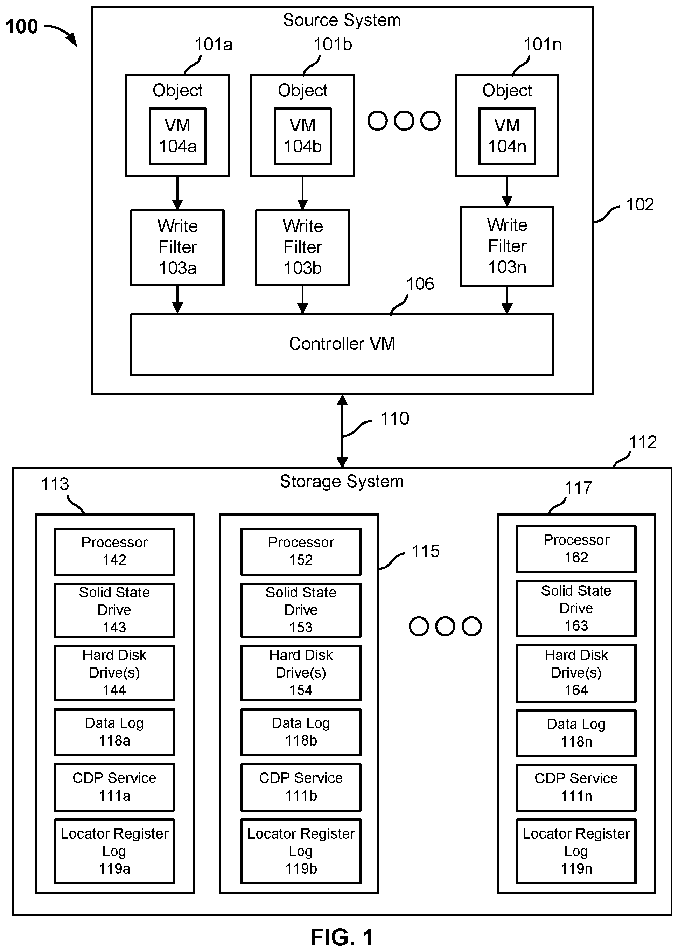

FIG. 1 is a block diagram illustrating a system for providing continuous data protection in accordance with some embodiments. In the example shown, system 100 includes a source system 102 coupled to storage system 112 via connection 110. Connection 110 may be a wired connection or a wireless connection. Connection 110 may be a local area network (LAN), a wireless area network (WAN), an intranet, the Internet, and/or a combination thereof.

Source system 102 is comprised of a first object 101a, a second object 101b, ..., and an nth object 101n. Each object may be a different VM. Although FIG. 1 depicts an object as a VM, source system 102 may host different objects, such as a database, an application, a container, a pod, etc.

CDP may be enabled for objects 101a, 101b, ..., 101n. To enable CDP for an object, a write filter may be attached to an object. The write filter may be attached at a disk layer of the object (e.g., disk write filter), a file system layer of the object (e.g., file system write filter), or a virtualized layer of the object (e.g., virtualized write filter). An object may be associated with one or more disks. A corresponding write filter may be attached to each of the one or more disks. A disk may be associated with one or more write filters.

In the example, object 101a is associated with write filter 103a, object 101b is associated with write filter 103b, ..., and object 101n is associated with write filter 103n. A write filter may be configured to intercept all IOs of an associated CDP-enabled object, filter out the read Ios, and provide a stream of the data changes to controller VM 106. A write filter may be configured to attach a sequence number to each intercepted write IO.

The sequence number may include an incarnation ID and a change ID. In some embodiments, the incarnation ID may indicate an incarnation of the write filter and may be incremented each time the write filter is restarted after a crash (e.g., object crash, filter crash). In some embodiments, the incarnation ID may not be incremented after a clean restart of an object. The change ID may be incremented for each intercepted write IO. For example, the sequence number may be represented as [incarnation ID, change ID]. The sequence number may be [0, 0], [0, 1] ... [0, n]. In the event the write filter goes offline after a crash and comes back online, the incarnation ID may be incremented such that the sequence numbers attached to the intercepted write Ios may be [1, 0], [1, 1] ... [1, n].

Storage system 112 includes a first node 113, second node 115, a third node 117, ... , and an nth node 117. In some embodiments, the nodes 113, 115, ..., 117 may be homogenous nodes, where each node has the same capabilities (e.g., processing, storage, memory, etc.). In some embodiments, at least one of the nodes 113, 115, ..., 117 may be a heterogeneous node with different capabilities (e.g., processing, storage, memory, etc.) than the other nodes of storage system 112.

In some embodiments, each node may have a corresponding processor, a corresponding CDP service, and a plurality of storage tiers. A first storage tier may correspond to a storage with faster access times than a second storage tier. A first storage tier may correspond to a solid state drive and a second storage tier corresponds to a hard disk drive.

In some embodiments, a node of storage system 112 may include a processor, memory, and a plurality of storage devices. The plurality of storage devices may include one or more solid state drives, one or more hard disk drives, or a combination thereof. In the example shown, nodes 113, 115, ..., 117 include respective processors 142, 152, ..., 162, respective solid state drives 143, 153, ..., 163, respective hard disk drives 144, 154, ..., 164, and respective CDP services 145, 155, ..., 165.

In some embodiments, a node of storage system 112 may include a processor and memory, and may be coupled to a separate storage device. The separate storage device may include one or more storage devices (e.g., flash storage devices). A storage device may be segmented into a plurality of partitions. Each of the nodes 113, 115, ..., 117 may be allocated one or more of the partitions. The one or more partitions allocated to a node may be configured to store data associated with some or all of the plurality of objects that were backed up to storage system 112. For example, the separate storage device may be segmented into 10 partitions and storage system 112 may include 10 nodes. A node of the 10 nodes may be allocated one of the 10 partitions.

In some embodiments, a node of storage system 112 may include a processor, memory, and a storage device. The node may be coupled to a separate storage device. The separate storage device may include one or more storage devices. A storage device may be segmented into a plurality of partitions. Each of the nodes 113, 115, ..., 117 may be allocated one or more of the partitions. The one or more partitions allocated to a node may be configured to store data associated with some or all of the plurality of objects that were backed up to storage system 112. For example, the separate storage device may be segmented into 10 partitions and storage system 112 may include 10 nodes. A node of the 10 nodes may be allocated one of the 10 partitions.

Storage system 112 may be a cloud instantiation of a storage system. A configuration of the cloud instantiation of storage system 112 may be a virtual replica of storage system 112. For example, storage system 112 may be comprised of three cluster nodes, each cluster node with a storage capacity of 10 TB. A cloud instantiation of storage system 112 may be comprised of three virtual nodes, each virtual node with a storage capacity of 10 TB. In other embodiments, a cloud instantiation of storage system 112 may have more storage capacity than an on-premises instantiation of storage system 112. In other embodiments, a cloud instantiation of storage system 112 may have less storage capacity than an on-premises instantiation of storage system 112.

In a first technique, controller VM 106 may be configured to accumulate a stream of data changes associated with an object, such as objects 101a, 101b, ..., 101n, and provide one or more sets of data changes (e.g., one or more batches of data changes) to a CDP service associated with one of the nodes 113, 115, ..., 117. Controller VM 106 may be configured to provide the one or more sets of data changes to any of CDP services 111a, 111b, ..., 111n. Each set of data changes may correspond to a different epoch. Nodes 113, 115, ..., 117 may be coupled to each other via an internal network associated with storage system 112. Nodes 113, 115, ..., 117 each include a corresponding data log 118a, 118b, ..., 118n (e.g., a journal) capable of storing data changes. In some embodiments, the data log may be a distributed data log. A data change included in the set of data changes may be comprised of a plurality of data chunks that are stored across the nodes 113, 115, ..., 117.

Each time a CDP service receives a set of data changes, the CDP service may analyze one or more metrics associated with nodes 113, 115, ..., 117. In other words, a metric, at least, may be associated with one or more of the nodes 113, 115, ..., 117. The metric may therefore be analyzed for one of the nodes or a plurality of the nodes. Analyzing one or more metrics may comprise determining one or more values for the one or more metrics. The CDP service may select for recording the received set of data changes on one or more data logs among a plurality of data logs 118a, 118b, ..., 118n based at least in part on the analysis of metrics of the plurality of nodes 113, 115, ..., 117.

In some embodiments, the CDP service may dynamically select a single data log based at least in part on a dynamic analysis of metrics of the plurality of nodes 113, 115, ..., 117. The dynamic analysis may indicate that the node with which the CDP is associated is individually capable of ingesting the set of data changes at a particular rate and/or that the node is individually capable of logging or recording the data changes included in the set in a manner that meets the specified RPO and/or RTO. The RPO and the RTO may be expressed as times, so the node being capable of logging or recording the data changes in the manner that meets the RPO or RTO may mean that the node is capable of logging or recording the data changes within a particular, predetermined time. The metrics of nodes 113, 115, ..., 117 may include ingest queue length, CPU utilization, etc. An ingest queue length may be measured based on the number of bytes in the queue, a time required to ingest the bytes in the queue, a number of times in the queue, a size of the items in the queue, etc. The metrics associated with a node may influence or indicate a rate at which the node is capable of logging a set of data changes. In response to such a determination that the CDP service may log in the data log associated with the node the set of data changes. Subsequently, the CDP service may record in a corresponding locator register log 119a, 119b, ..., 119n a reference to a portion of the data log associated with the node storing the received set of data changes.

In some embodiments, the locator register log may be a distributed log (i.e., locator register log 119a, 119b, ..., 119n) shared between the nodes of storage system 112. In some embodiments, the locator register log may be located at one of the nodes 113, 115, ..., 117. The locator register log may be stored in a solid state drive or a hard disk drive associated with a node. A data log may be stored in a solid state drive or a hard disk drive associated with a node.

In some embodiments, the CDP service (e.g., CDP service 111a) may determine that the node with which the CDP service is associated (e.g., node 113) is unable to ingest and/or log the set of data changes in a manner that meets the specified RPO and/or RTO. For example, the determination may be that node 113 is not individually capable of ingesting the set of data changes at a particular rate and/or logging the data changes included in the set in a manner that meets the specified RPO and/or RTO. In response to such a determination, the CDP service (e.g., CDP service 111a) may select a plurality of data logs associated with the plurality of nodes 113, 115, ..., 117 based at least in part on a dynamic analysis of metrics of the plurality of nodes 113, 115, ..., 117, may divide the set of changes into a plurality of subsets, and may log, in parallel, a corresponding subset of data changes in a corresponding selected data log associated with the plurality of nodes 113, 115, ..., 117. In some embodiments, some of the data logs 118a, 118b, ... , 118n may be selected. In some embodiments, all of the data logs 118a, 118b, ..., 118n may be selected. In some embodiments, the selected data logs may include the data log stored on a node with which the CDP service is associated. In some embodiments, the selected data logs may exclude the data log stored on a node with which the CDP service is associated. After logging a corresponding subset of data changes in one of the selected data logs, the CDP service (e.g., CDP service 111a) may record in a locator register log (e.g., locator register log 119a) a reference to a portion of the selected data log associated with the node storing the corresponding subset of data changes. The parallel ingestion of data changes may prevent a single node from becoming overloaded with logging data changes and becoming a bottleneck.

Each data change included in a set or subset of data changes may be associated with a corresponding sequence number. In some embodiments, a second node (e.g., node 115) may finish logging a second set or subset of data changes (e.g., data changes 51-100) before a first node (e.g., node 113) finishes logging a first set or subset of data changes (e.g., data changes 1-50). The CDP service associated with the second node (e.g., CDP service 111b) may provide the CDP service associated with the first node (e.g., CDP service 111a) an indication to update the locator register log because the second node has finished logging the second set or subset of data changes. In response to receiving the indication, the first node may perform a check before updating the locator register log (e.g., locator register log 119b) and prevent the locator register log from being updated with data changes that are out-of-sequence (e.g., logging data changes 51-100 before logging data changes 1-50). A data change may be consistent if a sequence number associated with the data change is in-sequence with respect to a previous data change. A data change may be inconsistent if the sequence number associated with the data change is out-of-sequence with respect to a previous data change. The first node may determine whether the update is a consistent update. In response to a determination that the update is a consistent update, the CDP service associated with the first node may update the locator register log. In response to a determination that the update is an inconsistent update, the CDP service associated with the first node may store the update in a buffer associated with the first node. This may ensure that the locator register log is consistent in the event any of the nodes go offline before the locator register log is updated. For example, the locator register log may be consistent if data changes 1-50 are logged, data changes 51-68 are logged, and then the first node goes offline. However, the locator register log may be inconsistent if data changes 51-100 are logged and then the second node goes offline. In this example, locator register log would be missing entries for data changes 0-50. The CDP service associated with the first node may update the locator register log at a later point in time at which the locator register log update associated with the second node becomes a consistent update.

A consistent locator register log is needed to restore the object to any point in time for which there is an associated data change. A restore request may be received to restore data to the source system. The restore request may indicate at least some of the data changes indicated in the locator register log. The locator register log may be used to locate the at least some of the data changes in the data logs and those changes may be provided to the source system. The restore request may indicate a point in time. A backup may be determined that is the most-recent backup before the indicated point in time. The backup may be an incremental or full backup. The backup may be provided to the source system and data changes made between a time associated with the backup and the indicated point in time may be determined and located using the locator register log, before being applied to the backup. The backup with the changes applied may then be sent to the source system to perform the restore operation.

In some embodiments, the CDP service (e.g., CDP service 111a) dynamically may select the data log associated with a different node (e.g., node 115, ..., 117). The dynamic selection may be based at least in part on a dynamic analysis of metrics of the different node. The CDP service may log in the data log associated with the different node the set of data changes. In some embodiments, at least two of the nodes associated with storage system 112 may be capable of ingesting the set of data changes at a particular rate and logging the set of data changes in a manner that satisfies a specified RPO and/or RTO. In such embodiments, the CDP service may select one of the data logs and may log the set of changes in the selected data log.

In a second technique, controller VM 106 may accumulate the stream of data changes associated with an object, such as objects 101a, 101b, ..., 101n into a set of data changes, and may analyze one or more metrics of a plurality of nodes 113, 115, ..., 117. The controller VM 106 may determine whether any of the nodes 113, 115, ..., 117 is individually capable of ingesting the set of data changes at a particular rate and logging the data changes included in the set in a manner that meets the specified RPO and/or RTO. The process described below may be repeated each time controller VM 106 accumulates a set of data changes. Each set of data changes may correspond to a different epoch.

Controller VM 106 may select for recording the received set of data changes on one or more data logs among a plurality of data logs 118a, 118b, ... , 118n based at least in part on a dynamic analysis of metrics of the plurality of nodes 113, 115, ..., 117. In some embodiments, controller VM 106 may dynamically select the data log associated with a single node (e.g., node 113) and may provide the received set of data changes to the single node associated with the selected data log. In response, the CDP service associated with the single node (e.g., CDP service 111a) may ingest the set of data changes and logs the set of data changes in the selected data log associated with the single node. After logging the received set of data changes in the selected data log, the single node records in a locator register log (e.g., locator register log 119a) a reference to a portion of the selected data log associated with the single node storing the received set of data changes.

In some embodiments, controller VM 106 may select a plurality of data logs associated with a plurality of nodes 113, 115, ..., 117 based at least in part on a dynamic analysis of metrics of the plurality of nodes 113, 115, ..., 117, divides the set of changes into a plurality of subsets, and provides a corresponding subset to each of the nodes associated with the selected data logs. In some embodiments, some of the data logs 118a, 118b, ..., 118n are selected. In some embodiments, all of the data logs 118a, 118b, ..., 118n are selected. In response, a node associated with a selected data log (e.g., node 113), in parallel, ingests the corresponding subset of data changes and logs in the selected data log the corresponding subset of data changes. After logging the corresponding subset of data changes in the selected data log, the node associated with the selected data log records in a locator register log (e.g., locator register log 119a) a reference to a portion of the selected data log associated with the node storing the subset of data changes. The parallel ingestion of data changes may prevent a single node from becoming overloaded with logging data changes and becoming a bottleneck.

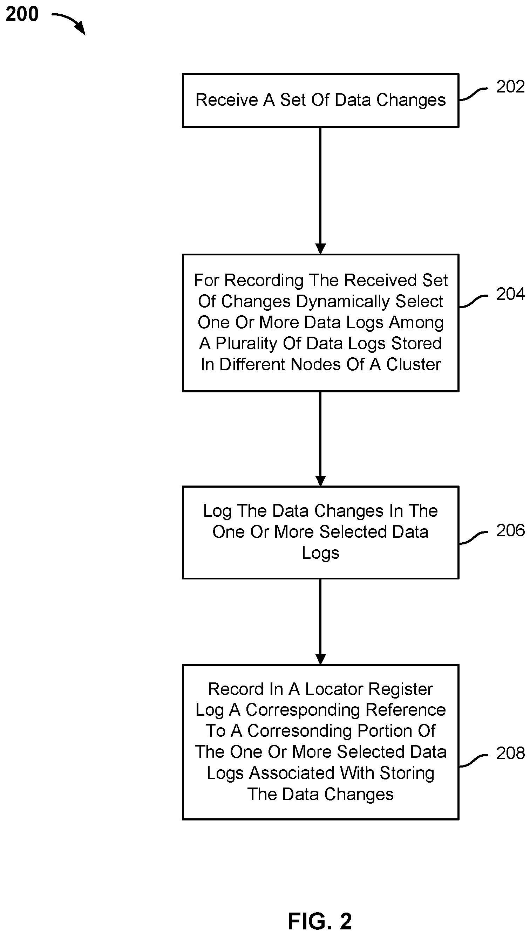

FIG. 2 is a flow diagram illustrating a process for providing continuous data protection in accordance with some embodiments. In the example shown, process 200 may be implemented by a storage system, such as storage system 112.

At 202, a set of data changes is received. The set of data changes may be associated with an epoch. The set of data changes may include a plurality of data changes, each having a corresponding sequence number (e.g., data changes 1-50). The sequence numbers in the set of data changes may be sequential. The set of data changes may correspond to one or more write I/Os associated with an object (e.g., VM, database, applications, etc.). The set of data changes may include an associated entity identifier. The associated entity identifier may indicate the object with which the set of data changes is associated (e.g., a VMDK associated with a VM). A data change included in the set of data changes may be a key-value pair. The key may be the entity identifier and the value may be a sequence number. The sequence number is associated with a corresponding write I/O.

At 204, one or more data logs among a plurality of data logs stored in different nodes of a storage system are dynamically selected for recording the received set of data changes. The one or more data logs may be selected at least in part on a dynamic analysis of metrics of the different nodes of the storage system. The metrics of the different nodes associated with the storage system may include ingest queue length, CPU utilization, etc. The CDP service may generate a corresponding reference to a corresponding portion of the one or more selected data logs associated with storing the data changes.

A CDP service associated with a first node receiving the set of changes may analyze the one or more metrics of a plurality of nodes associated with the storage system and may determine whether the first node is individually capable of ingesting the set of data changes at a particular rate and logging the data changes included in the set in a manner that meets the specified RPO and/or RTO.

In some embodiments, the CDP service associated with the first node may determine that the first node is individually capable of ingesting the set of data changes at a particular rate and logging the data changes included in the set in a manner that meets the specified RPO and/or RTO and may select the data log associated with the first log for recording the received set of changes.

In some embodiments, the CDP service associated with the first node may determine that the first node is not individually capable of ingesting the set of data changes at a particular rate and/or logging the data changes included in the set in a manner that meets the specified RPO and/or RTO. In response to such a determination, the CDP service associated with the first node may dynamically select for recording the received set of data changes a plurality of data logs stored in some or all of the plurality of nodes associated with the storage system based at least in part on a dynamic analysis of metrics of the plurality of nodes associated with the storage system. In some embodiments, the selected data logs may include the data log stored on the first node. In some embodiments, the selected data logs may exclude data log stored on the first node.

At 206, the data changes are logged in the one or more selected data logs. The data changes may be logged at a corresponding portion of the one or more selected data logs. A data log associated with a node may log a sequence number with a corresponding data change. In some embodiments, a set of data changes may be stored in a data log. The data log may include an entry for each data change included in the set of data changes. In some embodiments, a subset of data changes is stored in a data log. The data log may include an entry for each data change included in the subset of data changes.

At 208, a corresponding reference to a corresponding portion of the one or more selected data logs associated with storing the data changes is recorded in a locator register log.

In some embodiments, the set of data changes may be stored in a data log associated with a single node. An entry or reference in the locator register log may map a data log associated with the single node (e.g., a shard) to the data changes. The reference may map a file offset within the data log at which the data changes are stored or begin and/or a shard size with sequence numbers of data changes included in the set.

In some embodiments, the set of data changes may be divided into a plurality of subsets and may be stored in a corresponding data log associated with a plurality of nodes. An entry or reference in the locator register log may map a data log associated with the one of the nodes (e.g., a shard) to the data changes. The reference may map a file offset within the data log at which the subset of data changes is stored or begin and a shard size with the one of the nodes with sequence numbers of data changes included in the subset.

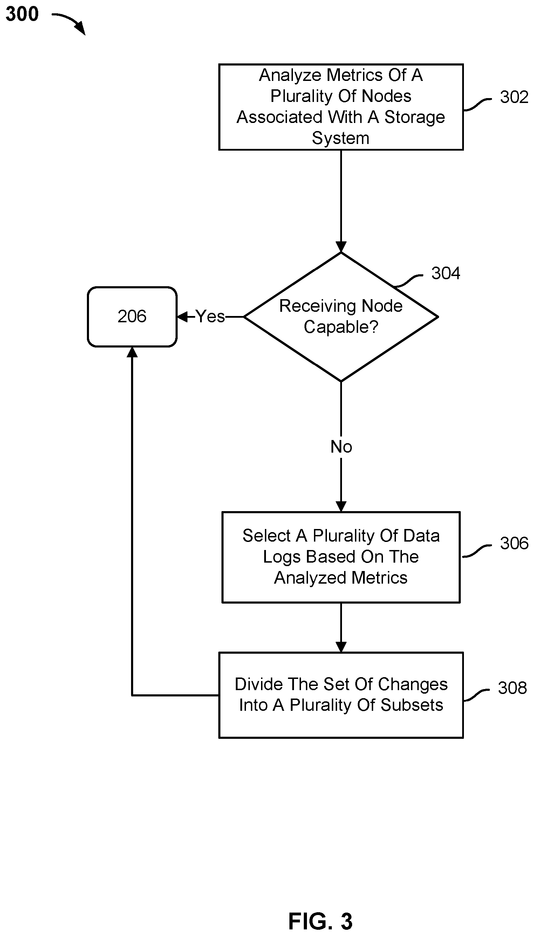

FIG. 3 is a flow diagram illustrating a process for dynamically selecting one or more data logs in accordance with some embodiments. In the example shown, process 300 may be implemented by a CDP service, such as CDP services 111a, 111b, ..., 111n. In some embodiments, process 300 may be implemented to perform some or all of step 204 of process 200.

At 302, metrics of a plurality of nodes associated with a storage system are analyzed. The metrics of the different nodes associated with the storage system may include ingest queue length, CPU utilization, etc.

At 304, it is determined whether a node receiving a set of changes is capable of ingesting the set of data changes at a particular rate and/or logging the set of data changes in a manner that satisfies a specified RPO and/or RTO. In response to a determination that the specified RPO and/or RTO is able to be satisfied by the node receiving the set of changes, the log of the receiving node may be selected and process 300 proceeds to 206. For example, a size of the set of data changes may be 100 MB, the receiving node may be capable of logging the data changes at a rate of 100 MB/s based on the current metrics of the node, and a specified RPO may be 1 second.

In response to a determination that the RPO and/or RTO is unable to be satisfied by the receiving node, process 300 proceeds to 306. For example, a size of the set of data changes may be 1 GB, the node may be capable of logging the data changes at a rate of 100 MB/s based on the current metrics of the node, and a specified RPO may be 1 second. In this example, the node needs at least 10 seconds to log the data changes to the data log associated with the node. For a high change rate object where the node may continue to receive one or more additional sets of data changes, the node may become a bottleneck when logging the data changes and prevent the specified RPO and/or RTO from being satisfied.

At 306, a plurality of logs associated with a plurality of nodes are selected based on the analyzed metrics. In some embodiments, some of the data logs associated with the plurality of nodes may be selected. In some embodiments, all of the data logs associated with the plurality of nodes may be selected. In some embodiments, the selected data logs may include the data log stored on the receiving node. In some embodiments, the selected data logs may exclude the data log stored on the receiving node.

At 308, the set of changes is divided into a plurality of subsets. In some embodiments, the number of subsets may be equal to the number of nodes associated with the storage system. In some embodiments, the number of subsets may be less than the number of nodes associated with the storage system. In some embodiments, the number of subsets may be the number of subsets needed to satisfy the specified RPO and/or RTO.

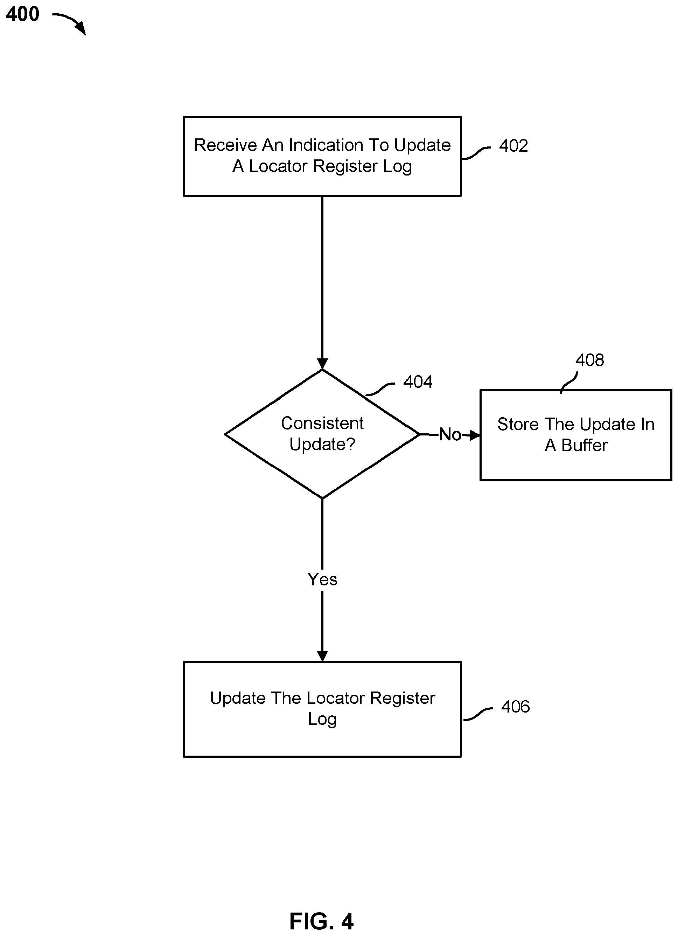

FIG. 4 is a flow diagram illustrating a process for updating a locator register log in accordance with some embodiments. In the example shown, process 400 may be implemented by a node, such as nodes 113, 115, ..., 117. In some embodiments, process 400 may be implemented to perform some or all of step 208 of process 200 or some or all of step 556 of process 550.

At 402, an indication to update a locator register log is received. The indication may include a log identifier, a log offset, a shard size, and a set of sequence numbers associated with the update. A plurality of nodes may be logging, in parallel, a set and/or a subset of data changes. A first node may finish logging an assigned set and/or an assigned subset of data changes before a second node finishes logging an assigned set and/or an assigned subset of data changes.

At 404, it is determined whether the update is a consistent update. The locator register log may include one or more entries, each entry with a corresponding sequence number. The node may determine whether a first sequence number included in the set of sequence numbers associated with the update is the next sequential number after the sequence number associated with a most recent entry of the locator register log.

In response to a determination that the update is a consistent update, process 400 proceeds to 406. For example, the locator register log may include entries for data changes having sequence numbers 1-50 and a first sequence number included in the set of sequence numbers associated with the update is 51.

In response to a determination that the update is not a consistent update, process 400 proceeds to 408. For example, the locator register log may include entries for data changes having sequence numbers 1-50 and a first sequence number included in the set of sequence numbers associated with the update is 101.

At 406, the locator register log is updated. The locator register log may be updated to include one or more entries corresponding to one or more data changes. An entry in the locator register log may map a data log associated with a node, a file offset, a shard size, and a location of the data change within the log associated with the node with a sequence number of the data change.

At 408, the set of sequence numbers associated with the update are stored in a buffer. The locator register log may be updated at a later point in time, i.e., when updating the locator register log with the buffered set of sequence numbers causes the locator register log to remain consistent.

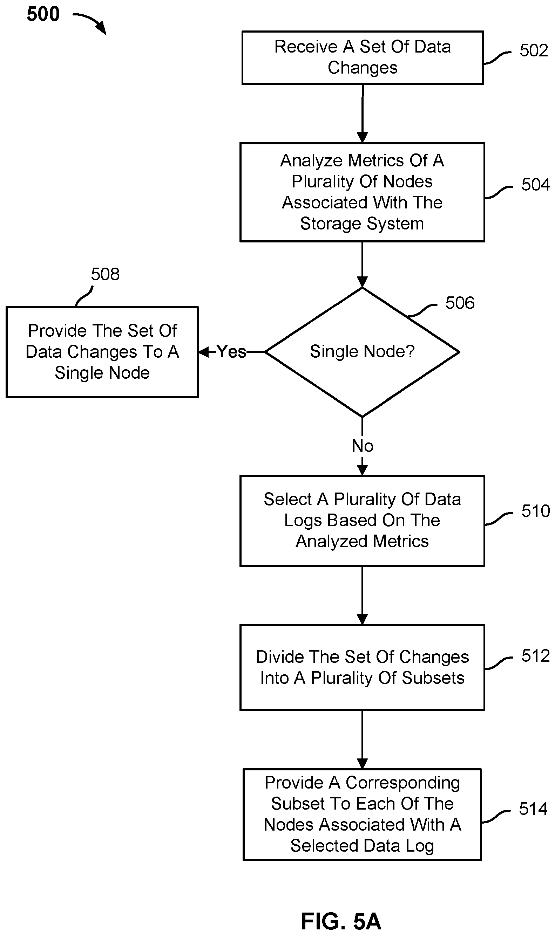

FIG. 5A is a flow diagram illustrating a process for providing continuous data protection in accordance with some embodiments. In the example shown, process 500 may be implemented by a controller VM, such as controller VM 106.

At 502, a set of data changes is received. The set of data changes may be associated with an epoch. The set of data changes may correspond to one or more write I/Os associated with an object (e.g., VM, database, applications, etc.). The set of data changes may include an associated entity identifier. The associated entity identifier may indicate the object with which the set of data changes is associated (e.g., a VMDK associated with a VM). A data change included in the set of data changes may be a key-value pair. The key may be the entity identifier and the value may be a sequence number. The sequence number may be associated with a corresponding write I/O.

At 504, metrics of a plurality of nodes associated with a storage system are analyzed. The metrics of the different nodes associated with the storage system may include ingest queue length, CPU utilization, etc.

At 506, it is determined whether a single node associated with the storage system is capable of ingesting the set of data changes at a particular rate and/or logging the set of data changes in a manner that satisfies a specified RPO and/or RTO. In response to a determination that the specified RPO and/or RTO is able to be satisfied by a single node, process 500 proceeds to 508. For example, a size of the set of data changes may be 100 MB, the node may be capable of logging the data changes at a rate of 100 MB/s based on the current metrics of the node, and a specified RPO may be 1 second.

In response to a determination that the RPO and/or RTO is unable to be satisfied by a single node, process 500 proceeds to 510. For example, a size of the set of data changes may be 1 GB, the node may be capable of logging the data changes at a rate of 100 MB/s based on the current metrics of the node, and a specified RPO may be 1 second.

At 508, the set of data changes is provided to a single node. In some embodiments, one of the nodes associated with the storage system may be capable of ingesting the set of data changes at a particular rate and logging the set of data changes in a manner that satisfies a specified RPO and/or RTO. In such embodiments, the set of data changes may be provided to the one node.

In some embodiments, at least two of the nodes associated with the storage system may be capable of ingesting the set of data changes at a particular rate and logging the set of data changes in a manner that satisfies a specified RPO and/or RTO. In such embodiments, the set of data changes may be provided to one of the at least two nodes associated with the storage system that are capable of ingesting the set of data changes at a particular rate and logging the set of data changes in a manner that satisfies a specified RPO and/or RTO.

At 510, a plurality of data logs are selected based on the analyzed metrics. In some embodiments, some of the data logs associated with the plurality of nodes may be selected. In some embodiments, all of the data logs associated with the plurality of nodes may be selected.

At 512, the set of changes is divided into a plurality of subsets. In some embodiments, the number of subsets may be equal to the number of nodes associated with the storage system. In some embodiments, the number of subsets may be less than the number of nodes associated with the storage system. In some embodiments, the number of subsets may be the number of subsets needed to satisfy the specified RPO and/or RTO.

At 514, a corresponding subset is provided to each of the nodes associated with a selected data log. For example, a first subset may be provided to a first node and a second subset may be provided to a second node.

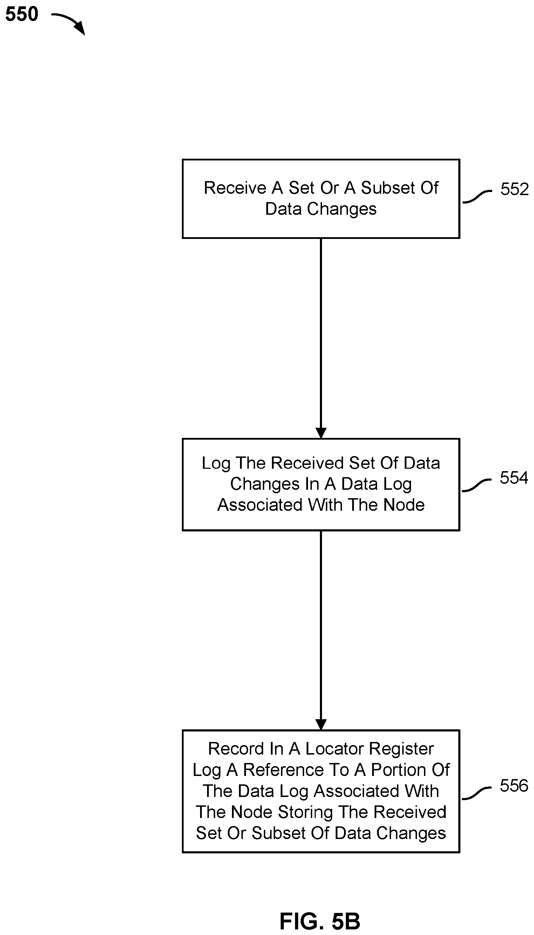

FIG. 5B is a flow diagram illustrating a process for providing continuous data protection in accordance with some embodiments. In the example shown, process 550 may be implemented by a node of a storage system, such as nodes 113, 115, ..., 117.

At 552, a set or a subset of data changes is received. At 554, the received set of data changes is logged in a data log associated with the node. At 556, a reference to a portion of the data log associated with the node storing the received set or subset of data changes is recorded in a locator register log.

The invention can be implemented in numerous ways, including as a process; an apparatus; a system; a composition of matter; a computer program product embodied on a computer readable storage medium; a computer-readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided along with accompanying figures that illustrate the principles of the invention. The invention is described in connection with such embodiments, but the invention is not limited to any embodiment. The scope of the invention is limited only by the claims and the invention encompasses numerous alternatives, modifications, and equivalents. Numerous specific details are set forth in the description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A method (200) for recording, at a storage system, data changes made to an object (101) stored at a source system (102), wherein the storage system is configured to provide continuous data protection for the source system, comprising:
receiving (202) a set of data changes made to an object (101) stored at a source system (102);
responsive to receiving the set of data changes, dynamically determining a value of a metric for each of a plurality of nodes (113, 115, 117) of the storage system, wherein the metric comprises at least one of an ingest queue length or a CPU utilization at a respective node;
selecting (204) one or more data logs (118) for recording the set of data changes from among a plurality of data logs, each of the data logs being stored in a corresponding node of the storage system, wherein the selecting is based at least in part on a size of the received set of data changes, the value of the determined metrics, and at least one of a first predetermined amount of time specified by a recovery point objective, RPO, or a second predetermined amount of time specified by a recovery time objective, RTO;
recording (206) each of at least some of the data changes in the set of data changes in a data log of the one or more selected data logs; and
storing (208), in a locator register log (119), at least one reference that maps each data change to the data log in which the data change is recorded.

2. The method of any preceding claim, wherein the value of the metric is dynamically determined for a first node of the plurality of nodes, the first node comprising a first data log, and wherein the method further comprises:
determining, based on the value of the metric and the first predetermined amount of time, whether the first node is capable of recording the set of data changes within the first predetermined amount of time; and
selecting the one or more data logs, based on determining whether the first node is capable of recording the set of data changes within the first predetermined amount of time.

3. The method of claim 2, wherein, in response to determining that the first node is capable of recording the set of data changes within the first predetermined amount of time, the first data log is selected as the one or more data logs and the data changes are recorded in the first data log.

4. The method of claim 2 or claim 3, wherein, in response to determining that the first node is not capable of recording the set of data changes within the first predetermined amount of time, two or more data logs of the plurality of data logs are selected as the one or more data logs and the data changes are recorded in parallel across the two or more data logs.

5. The method of claim 4, wherein, in response to determining that the first node is not capable of recording the set of data changes within the first predetermined amount of time, the method further includes:
dividing the set of data changes into a plurality of subsets, wherein the number of subsets corresponds to the number of selected data logs; and
storing each subset at a respective data log of the two or more data logs.

6. The method of claim 4 or claim 5, wherein a value for the metric is determined for each of the plurality of nodes, and wherein the two or more data logs are selected based on the values of the metric for the plurality of nodes and the first predetermined amount of time.

7. The method of any preceding claim, wherein storing the at least one reference includes:
determining the at least one reference based on: the set of data changes; and the one or more selected data logs;
determining that the at least one reference is in-sequence with a most recent reference stored in a locator log; and
storing the at least one reference in the locator log in response to determining that the at least one reference is in-sequence with the most recent reference stored in the locator log.

8. The method of claim 7, wherein storing the at least one reference comprises, prior to determining that the at least one reference is in-sequence with the most recent reference stored in the locator log:
determining that the at least one reference is out-of-sequence with the most-recent reference stored in the locator log;
storing the at least one reference in a buffer; and
storing, as the most recent reference a further reference in the locator log, wherein the at least one reference is in-sequence with the further reference.

9. The method of claim 7 or claim 8, wherein each data change has a corresponding sequence number, and wherein determining that the at least one reference is in-sequence with a most recent reference stored in the locator log includes:
determining that a first sequence number in a set of sequence numbers associated with the at least one reference is the next sequential number after the sequence number associated with the most recent reference.

10. The method of any preceding claim, comprising:
receiving a further set of data changes made to the object stored at the source system;
selecting one or more further data logs for recording the further set of data changes, from among the plurality of data logs, wherein the selecting is based at least in part on the received further set of data changes and a further value of the metric determined for one or more of the nodes of the storage system;
recording each of at least some of the data changes in the further set of data changes in a data log of the one or more selected further data logs; and
storing at least one further reference that maps each data change to the data log in which the data change is recorded.

11. The method of any preceding claim, comprising:
receiving a request to restore data to the source system, the data to be restored including at least a portion of the set of data changes;
using the at least one reference to locate, in the selected data logs, the at least a portion of the set of data changes; and
providing, to the source system, the data to be restored including the at least the portion of the set of data changes.

12. A computer program product embodied in a non-transitory computer readable medium and comprising computer instructions for performing the method according to any preceding claim.

13. A system (100), comprising:
one or more processors (142, 152, 162); and
memory storing instructions, that when implemented by the one or more processors, cause the system to perform the method of any of claims 1 to 11.

## Patentansprüche

1. Verfahren (200) zum Aufzeichnen von Datenänderungen, die an einem in einem Quellsystem (102) gespeicherten Objekt (101) vorgenommen wurden, in einem Speicherungssystem, wobei das Speicherungssystem konfiguriert ist, um kontinuierlichen Datenschutz für das Quellsystem bereitzustellen, umfassend:
Empfangen (202) eines Satzes von Datenänderungen, die an einem in einem Quellsystem (102) gespeicherten Objekt (101) vorgenommen wurden;
als Reaktion auf das Empfangen des Satzes von Datenänderungen, dynamisches Bestimmen eines Werts einer Metrik für jeden einer Vielzahl von Knoten (113, 115, 117) des Speicherungssystems, wobei die Metrik mindestens eines von einer Aufnahme-Warteschlangenlänge oder einer CPU-Auslastung an einem jeweiligen Knoten umfasst;
Auswählen (204) eines oder mehrerer Datenprotokolle (118) zum Aufzeichnen des Satzes von Datenänderungen aus einer Vielzahl von Datenprotokollen, wobei jedes der Datenprotokolle in einem entsprechenden Knoten des Speicherungssystems gespeichert ist, wobei das Auswählen mindestens zum Teil auf einer Größe des empfangenen Satzes von Datenänderungen, dem Wert der bestimmten Metriken und mindestens einem von einer ersten vorbestimmten Zeitspanne, die durch ein Wiederherstellungspunktziel, RPO, spezifiziert ist, oder einer zweiten vorbestimmten Zeitspanne, die durch ein Wiederherstellungszeitziel, RTO, spezifiziert ist, basiert;
Aufzeichnen (206) jeder von mindestens einigen der Datenänderungen in dem Satz von Datenänderungen in einem Datenprotokoll des einen oder der mehreren ausgewählten Datenprotokolle; und
Speichern (208), in einem Locator-Registerprotokoll (119), mindestens einer Referenz, die jede Datenänderung dem Datenprotokoll zuordnet, in dem die Datenänderung aufgezeichnet ist.

2. Verfahren nach einem der vorstehenden Ansprüche, wobei der Wert der Metrik dynamisch für einen ersten Knoten der Vielzahl von Knoten bestimmt wird, wobei der erste Knoten ein erstes Datenprotokoll umfasst, und wobei das Verfahren ferner umfasst:
Bestimmen, basierend auf dem Wert der Metrik und der ersten vorbestimmten Zeitspanne, ob der erste Knoten fähig ist, den Satz von Datenänderungen innerhalb der ersten vorbestimmten Zeitspanne aufzuzeichnen; und
Auswählen des einen oder der mehreren Datenprotokolle basierend auf dem Bestimmen, ob der erste Knoten fähig ist, den Satz von Datenänderungen innerhalb der ersten vorbestimmten Zeitspanne aufzuzeichnen.

3. Verfahren nach Anspruch 2, wobei als Reaktion auf das Bestimmen, dass der erste Knoten fähig ist, den Satz von Datenänderungen innerhalb der ersten vorbestimmten Zeitspanne aufzuzeichnen, das erste Datenprotokoll als das eine oder die mehreren Datenprotokolle ausgewählt wird und die Datenänderungen in dem ersten Datenprotokoll aufgezeichnet werden.

4. Verfahren nach Anspruch 2 oder Anspruch 3, wobei als Reaktion auf das Bestimmen, dass der erste Knoten nicht fähig ist, den Satz von Datenänderungen innerhalb der ersten vorbestimmten Zeitspanne aufzuzeichnen, zwei oder mehr Datenprotokolle der Vielzahl von Datenprotokollen als das eine oder die mehreren Datenprotokolle ausgewählt werden und die Datenänderungen parallel über die zwei oder mehr Datenprotokolle aufgezeichnet werden.

5. Verfahren nach Anspruch 4, wobei als Reaktion auf das Bestimmen, dass der erste Knoten nicht fähig ist, den Satz von Datenänderungen innerhalb der ersten vorbestimmten Zeitspanne aufzuzeichnen, das Verfahren ferner einschließt:
Aufteilen des Satzes von Datenänderungen in eine Vielzahl von Teilsätzen, wobei die Anzahl von Teilsätzen der Anzahl der ausgewählten Datenprotokolle entspricht; und
Speichern jedes Teilsatzes in einem jeweiligen Datenprotokoll der zwei oder mehr Datenprotokolle.

6. Verfahren nach Anspruch 4 oder Anspruch 5, wobei ein Wert für die Metrik für jeden der Vielzahl von Knoten bestimmt wird und wobei die zwei oder mehr Datenprotokolle basierend auf den Werten der Metrik für die Vielzahl von Knoten und der ersten vorbestimmten Zeitspanne ausgewählt werden.

7. Verfahren nach einem der vorstehenden Ansprüche, wobei das Speichern der mindestens einen Referenz einschließt:
Bestimmen der mindestens einen Referenz basierend auf: dem Satz von Datenänderungen; und dem einen oder den mehreren ausgewählten Datenprotokollen;
Bestimmen, dass die mindestens eine Referenz in Sequenz mit einer jüngsten in einem Locator-Protokoll gespeicherten Referenz ist; und
Speichern der mindestens einen Referenz in dem Locator-Protokoll als Reaktion auf das Bestimmen, dass die mindestens eine Referenz in Sequenz mit der jüngsten in dem Locator-Protokoll gespeicherten Referenz ist.

8. Verfahren nach Anspruch 7, wobei das Speichern der mindestens einen Referenz, vor dem Bestimmen, dass die mindestens eine Referenz in Sequenz mit der jüngsten in dem Locator-Protokoll gespeicherten Referenz ist, umfasst:
Bestimmen, dass die mindestens eine Referenz nicht in Sequenz mit der jüngsten in dem Locator-Protokoll gespeicherten Referenz ist;
Speichern der mindestens einen Referenz in einem Puffer; und
Speichern, als die jüngste Referenz, einer weiteren Referenz in dem Locator-Protokoll, wobei die mindestens eine Referenz in Sequenz mit der weiteren Referenz ist.

9. Verfahren nach Anspruch 7 oder Anspruch 8, wobei jede Datenänderung eine entsprechende Sequenznummer aufweist, und wobei das Bestimmen, dass die mindestens eine Referenz in Sequenz mit einer jüngsten in dem Locator-Protokoll gespeicherten Referenz ist, einschließt:
Bestimmen, dass eine erste Sequenznummer in einem Satz von Sequenznummern, die der mindestens einen Referenz zugeordnet sind, die nächste sequentielle Nummer nach der Sequenznummer ist, die der jüngsten Referenz zugeordnet ist.

10. Verfahren nach einem der vorstehenden Ansprüche, umfassend:
Empfangen eines weiteren Satzes von Datenänderungen, die an dem in dem Quellsystem gespeicherten Objekt vorgenommen wurden;
Auswählen eines oder mehrerer weiterer Datenprotokolle zum Aufzeichnen des weiteren Satzes von Datenänderungen aus der Vielzahl von Datenprotokollen, wobei das Auswählen mindestens zum Teil auf dem empfangenen weiteren Satz von Datenänderungen und einem weiteren Wert der Metrik basiert, der für einen oder mehrere der Knoten des Speicherungssystems bestimmt wurde;
Aufzeichnen jeder von mindestens einigen der Datenänderungen in dem weiteren Satz von Datenänderungen in einem Datenprotokoll des einen oder der mehreren ausgewählten weiteren Datenprotokolle; und
Speichern mindestens einer weiteren Referenz, die jede Datenänderung dem Datenprotokoll zuordnet, in dem die Datenänderung aufgezeichnet ist.

11. Verfahren nach einem der vorstehenden Ansprüche, umfassend:
Empfangen einer Anfrage zum Wiederherstellen von Daten in das Quellsystem, wobei die wiederherzustellenden Daten mindestens einen Teil des Satzes von Datenänderungen einschließen;
Verwenden der mindestens einen Referenz zum Lokalisieren, in den ausgewählten Datenprotokollen, des mindestens einen Teils des Satzes von Datenänderungen; und
Bereitstellen, an das Quellsystem, der wiederherzustellenden Daten, die mindestens den Teil des Satzes von Datenänderungen einschließen.

12. Computerprogrammprodukt, das in einem nicht flüchtigen computerlesbaren Medium verkörpert ist und Computeranweisungen zum Durchführen des Verfahrens nach einem der vorstehenden Ansprüche umfasst.

13. System (100), umfassend:
einen oder mehrere Prozessoren (142, 152, 162); und
Speicher, der Anweisungen speichert, die, wenn sie durch den einen oder die mehreren Prozessoren implementiert werden, das System veranlassen, das Verfahren nach einem der Ansprüche 1 bis 11 durchzuführen.

## Revendications

1. Procédé (200) permettant d'enregistrer, au niveau d'un système de stockage, des changements de données apportés à un objet (101) stocké au niveau d'un système source (102), dans lequel le système de stockage est configuré pour fournir une protection de données continue pour le système source, comprenant :
la réception (202) d'un ensemble de changements de données apportés à un objet (101) stocké au niveau d'un système source (102) ;
en réponse à la réception de l'ensemble de changements de données, la détermination dynamique d'une valeur d'une métrique pour chacun d'une pluralité de nœuds (113, 115, 117) du système de stockage, dans lequel la métrique comprend au moins l'une d'une longueur de file d'attente d'ingestion ou d'une utilisation de CPU au niveau d'un nœud respectif ;
la sélection (204) d'un ou des journaux de données (118) pour l'enregistrement de l'ensemble de changements de données d'une pluralité de journaux de données, chacun des journaux de données étant stocké dans un nœud correspondant du système de stockage, dans lequel la sélection est sur la base au moins en partie d'une taille de l'ensemble reçu de changements de données, de la valeur des métriques déterminées, et d'au moins l'un d'un premier laps de temps prédéterminé spécifié par un objectif de point de récupération, RPO, ou d'un second laps de temps prédéterminé spécifié par un objectif de temps de récupération, RTO ;
l'enregistrement (206) de chacun d'au moins certains des changements de données dans l'ensemble de changements de données dans un journal de données parmi le ou les journaux de données sélectionnés ; et
le stockage (208), dans un journal de registre de localisation (119), d'au moins une référence qui mappe chaque changement de données au journal de données dans lequel le changement de données est enregistré.

2. Procédé selon l'une quelconque revendication précédente, dans lequel la valeur de la métrique est déterminée dynamiquement pour un premier nœud de la pluralité de nœuds, le premier nœud comprenant un premier journal de données, et dans lequel le procédé comprend en outre :
le fait de déterminer, sur la base de la valeur de la métrique et du premier laps de temps prédéterminé, que le premier nœud est capable d'enregistrer l'ensemble de changements de données au cours du premier laps de temps prédéterminé ; et
la sélection du ou des journaux de données, sur la base de la détermination du fait que le premier nœud est capable d'enregistrer l'ensemble de changements de données au cours du premier laps de temps prédéterminé.

3. Procédé selon la revendication 2, dans lequel, en réponse à la détermination que le premier nœud est capable d'enregistrer l'ensemble de changements de données au cours du premier laps de temps prédéterminé, le premier journal de données est sélectionné en guise de journal ou journaux de données et les changements de données sont enregistrés dans le premier journal de données.

4. Procédé selon la revendication 2 ou la revendication 3, dans lequel, en réponse à la détermination que le premier nœud n'est pas capable d'enregistrer l'ensemble de changements de données au cours du premier laps de temps prédéterminé, deux journaux de données ou plus de la pluralité de journaux de données sont sélectionnés en guise de journal ou journaux de données et les changements de données sont enregistrés en parallèle à travers les deux journaux de données ou plus.

5. Procédé selon la revendication 4, dans lequel, en réponse à la détermination que le premier nœud n'est pas capable d'enregistrer l'ensemble de changements de données au cours du premier laps de temps prédéterminé, le procédé comporte en outre :
la division de l'ensemble de changements de données en une pluralité de sous-ensembles, dans lequel le nombre de sous-ensembles correspond au nombre de journaux de données sélectionnés ; et
le stockage de chaque sous-ensemble au niveau d'un journal de données respectif des deux journaux de données ou plus.

6. Procédé selon la revendication 4 ou la revendication 5, dans lequel une valeur pour la métrique est déterminée pour chacun parmi la pluralité de nœuds, et dans lequel les deux journaux de données ou plus sont sélectionnés sur la base des valeurs de la métrique pour la pluralité de nœuds et du premier laps de temps prédéterminé.

7. Procédé selon l'une quelconque revendication précédente, dans lequel le stockage de l'au moins une référence comporte :
la détermination de l'au moins une référence sur la base de : l'ensemble de changements de données ; et du ou des journaux de données sélectionnés ;
la détermination que l'au moins une référence est en séquence avec une référence la plus récente stockée dans un journal de localisation ; et
le stockage de l'au moins une référence dans le journal de localisation en réponse à la détermination que l'au moins une référence est en séquence avec la référence la plus récente stockée dans le journal de localisation.

8. Procédé selon la revendication 7, dans lequel le stockage de l'au moins une référence comprend, avant détermination que l'au moins une référence est en séquence avec la référence la plus récente stockée dans le journal de localisation :
la détermination que l'au moins une référence est hors séquence avec la référence la plus récente stockée dans le journal de localisation ;
le stockage de l'au moins une référence dans un tampon ; et
le stockage, en guise de référence la plus récente d'une référence supplémentaire dans le journal de localisation, dans lequel l'au moins une référence est en séquence avec la référence supplémentaire.

9. Procédé selon la revendication 7 ou la revendication 8, dans lequel chaque changement de données a un numéro de séquence correspondant, et dans lequel la détermination que l'au moins une référence est en séquence avec une référence la plus récente stockée dans le journal de localisation comporte :
la détermination qu'un premier numéro de séquence dans un ensemble de numéros de séquence associés à l'au moins une référence est le numéro séquentiel suivant après le numéro de séquence associé à la référence la plus récente.

10. Procédé selon l'une quelconque revendication précédente, comprenant :
la réception d'un ensemble supplémentaire de changements de données apportés à l'objet stocké au niveau du système source ;
la sélection d'un ou des journaux de données supplémentaires pour enregistrement de l'ensemble supplémentaire de changements de données, parmi la pluralité de journaux de données, dans lequel la sélection est sur la base au moins en partie de l'ensemble supplémentaire reçu de changements de données et d'une valeur supplémentaire de la métrique déterminée pour un ou des nœuds du système de stockage ;
l'enregistrement de chacun d'au moins certains des changements de données dans l'ensemble supplémentaire de changements de données dans un journal de données du ou des journaux de données supplémentaires sélectionnés ; et
le stockage d'au moins une référence supplémentaire qui mappe chaque changement de données, au journal de données dans lequel le changement de données est enregistré.

11. Procédé selon l'une quelconque revendication précédente, comprenant :
la réception d'une demande de restauration de données vers le système source, les données à restaurer comportant au moins une partie de l'ensemble de changements de données ;
l'utilisation de l'au moins une référence pour localiser, dans les journaux de données sélectionnés, l'au moins une partie de l'ensemble de changements de données ; et
la fourniture, au système source, des données à restaurer comportant l'au moins partie de l'ensemble de changements de données.

12. Produit programme informatique incorporé dans un support non transitoire lisible par ordinateur et comprenant des instructions informatiques permettant de mettre en œuvre le procédé selon l'une quelconque revendication précédente.

13. Système (100), comprenant :
un ou des processeurs (142, 152, 162) ; et
de la mémoire stockant des instructions, qui lorsqu'elles sont implémentées par le ou les processeurs, amènent le système à mettre en œuvre le procédé selon l'une quelconque des revendications 1 à 11.
